# EUROPÄISCHE PATENTSCHRIFT

(11) **EP 2 148 385 B1**
(45) Veröffentlichungstag und Bekanntmachung des Hinweises auf die Patenterteilung: **20.02.2013**
(21) Anmeldenummer: 09165442.6
(22) Anmeldetag: 14.07.2009
(51) Int. Cl.: H01M 10/50

(54) **Elektrische Energiespeichereinheit**
Electrical energy storage unit
Accumulateur d'énergie électrique

(30) Priorität: 24.07.2008 DE 102008034841
(43) Veröffentlichungstag der Anmeldung: 27.01.2010
(73) Patentinhaber: Behr GmbH & Co. KG, 70469 Stuttgart (DE)
(72) Erfinder: Herrmann, Hans-Georg, 70619, Stuttgart (DE); Moldovan, Florian, 70569, Stuttgart (DE); Steinbach, Martin, 71336, Waiblingen (DE)
(74) Vertreter: Grauel, Andreas

(56) Entgegenhaltungen:
- EP-A- 1 278 263
- WO-A-99/05748
- US-A- 5 162 171
- US-A1- 2003 215 702
- US-A1- 2008 090 137

## Beschreibung

Die vorliegend Erfindung bezieht sich auf eine elektrische Energiespeichereinheit gemäß Anspruch 1,

Moderne elektrische Energiespeicher wie Batterien in Fahrzeugen benötigen eine gute Kühlung, damit die durch Umwandlung von chemischer gespeicherter Energie in elektrische Energie entstehende Wärme schnell abgeführt werden kann und nicht zu einer Beschädigung oder Zerstörung des Energiespeichers führt,

In herkömmlichen Ansätzen sind bereits einige Möglichkeiten bekannt, um ähnliche Problemstellungen zu lösen. So beschreibt beispielsweise die Patentan meldung DE 10 2008 028 400.9 Anbindungsmöglichkeiten von Kühlblechen einer Batterie in verschiedenen Ausführungen an eine Kühlplatte

Weiterhin beschreibt die Patentanmeldung DE 102007066944.4 eine Kühlung von Batterieflachzellen, die als thermischen Pfad Kühlbleche vorweist. Es wird erwähnt, dass die Bleche mit der Kühlplatte in thermischem Kontakt stehen; dieser Kontakt sollte durch Vergießen hergestellt werden, um eine stabile Verbindung bereitzustellen.

Es ist auch Stand der Technik, Bleche in einen Stack aus Batterieflachzellen einzubringen und die Blechenden aus dem Paket herausstehen zu lassen; die herausstehenden Enden werden dann zumeist durch Luft abgekühlt.

Die Patentanmeldung DE 102007031674.9 beschreibt ein Ableiterverbundteil, das durch Umspritzen (oder in einer weiteren Ausführungsform durch Clipsen) mit Kunststoff besetzt werden kann. Dieses Metall-Kunststoffhybridteil kann sowohl elektrische und thermische Ströme ableiten als auch durch Kunststoffniete an eine Kühlplatte angebunden werden.

Die Lösungsansätze im Stand der Technik weisen jedoch einige Nachteile auf. So weist beispielsweise die Technologie des Anklebens oder Vergießens von Kühlblechen auf eine Kühlplatte nicht die gewünschte Haltbarkeit und Prozessfähigkeit auf; insb, erlauben die notwendigen festgeschrebenen Aushärtezeiten keine freie Gestaltung der Prozesstaktung, wie sie für größere Serien notwendig wird, Eine Luftkühlung ist häufig vom Kunden nicht gewünscht (unter anderem wegen einer Geräuschentwicklung sowie einem unvorteilhaften "Package").

Weiterhin basiert der vorstehend beschriebene Metall-Kunststoffhybrid auf der Idee einer sog. Ableiterkühlung; also der Kühlung über den elektrischen Pfad, Da jedoch bei einem aufgetretenen Kurzschluss zwischen Kühler und Ableiter nicht nur die elektrische Verbindung unterbrochen ist, sondern auch damit einhergehend die thermische Ableitung unterbrochen ist, tritt ein katastrophaler Versagensfall auf, so dass eine Kundenforderung nach Kühlung über einen potentialfreien thermischen Pfad besteht.

Es ist daher die Aufgabe der Erfindung, eine Möglichkeit zur einfachen und effizienten Kühlung einer elektrischen Energiespeichereinhelt zu schaffen.

Diese Aufgabe wird durch eine elektrische Energiespeichereinheit gemäß Anspruch 1 gelöst. Günstige Ausführungsformen der Erfindung sind durch die Unteransprüche näher definiert

Die vorliegende Erfindung schafft eine elektrische Energiespeichereinheit mit folgenden Merkmalen:
- zumindest einem Speicherelement, das eine elektrische Speichereinheit und zumindest ein daran befestigtes Kühlelement umfasst, wobei das Kühlelement einen Tellabschnitt aufweist, der an zumindest einer Seite von einer Oberfläche der elektrischen Speichereinheit absteht; und
- einer Halteeinrichtung zur Aufnahme des zumindest einen Speicherelements, wobei an der Halteeinrichtung eine Kühlplatte angeordnet ist und wobei die Halteeinrichtung einen Hebelmechanismus umfasst, der ausgebildet ist, um das Kühlelement derart an die Kühlplatte zu drücken, dass der von der Oberfläche der elektrischen Speichereinheit abstehende Teilabschnitt des Kühletements die Kühlplatte thermisch wirksam kontaktiert.

Die vorliegende Erfindung basiert auf der Erkenntnis, dass eine Möglichkeit zur Bereitstellung einer einfachen und effizienten Kühlung einer elektrischen Speichereinheit darin besteht, dass das Speiclierelement mechanisch in einer Halteeinrichtung mittels des Hebelmechanismus befestigt wird, wobei ein von der Speichereinheit abstehender wärmeleitfähiger Teilabschnitt des Kühlelementes mit der Kühlplatte thermisch in Kontakt tritt. Durch den Hebelmechanismus können bereits vorgefertigte Speichereinheiten, die ein elektrisches Speicherelement und ein daran befestigtes Kühlelement umfassen, einfach, schnell und effizient in der Haltevorrichtung angeordnet und befestigt werden, ohne dass eine Beeinträchtigung der Wärmeableitungsfähigkeit zu befürchten ist. Dabei wird ein Teilabschnitt des Kühlelements, der von einer Oberfläche des elektrischen Spelcherelements absteht, an die Kühlplatte der Haltevorrichtung gedrückt, so dass die im elektrischen Speicherelement bei Leistungsabgabe entstehende Wärme über das Kühlelement an die Kühlplatte abgeführt werden kann.

Die vorliegende Erfindung bietet den Vorteil, dass die bereits vorgefertigten Speichereinheiten mit den daran befestigten Kühlelementen herstellungstechnisch sehr einfach und schnell durch Betätigung des Hebelmechanismus zu kompakten elektrischen Energiespeichereinheiten zusammengefügt werden können, ohne dass längere Aushärtezeiten zum Trocknen von Klebemittel abzuwarten sind. Zugleich kann eine gute Wärmeabfuhr der von der elektrischen Speichereinheit abgegebenen Wärme über das Kühlelement an die Kühlplatte sichergestellt werden. Die einfach herzustellende elektrische Energiespeichereinheit wird somit gegenüber dem Stand der Technik kostengünstiger herstellbar und kann als kompaktes Modul trotzdem schnell in größere Einheiten verbaut werden.

Das charakterisierende Merkmal der vorliegenden Erfindung ist der Hebelmechanismus, dar ausgebildet ist, um einen Druck auf das KÜhlelement von einer Seite der elektrischen Speichereinheit auszuüben, die derjenigen Seite gegenüberliegt, an dem das Kühlelement von der Oberfläche der elektrischen Speichereinheit absteht. Dies bietet den Vorteil, dass durch die Hebelwirkung des Hebelmechanismus der Druck auf den abstehenden Teilabschnitt des Kühlelements von der dem abstehenden Teilabschnitt des Kühlelements gegenüberliegenden Seite der elektrischen Speichereinheit ausgeübt wird. Auf diese Weise wird ein Druck quer durch das Speicherelement ausgeübt, wodurch diese in der Halteeinrichtung stabillsiert wird.

In einer weiteren Ausführungsform der vorliegenden Erfindung kann das Speicherelement einen zweiten Teilabschnitt des Kühlelements aufweisen, der von der Oberfläche der elektrischen Speichereinheit an einer anderen Seite absteht und der demjenigen Teilabschnitt des Kühlelements gegenüberliegt, der von der Oberfläche der elektrischen Speichereinheit absteht, wobei der Hebelmechanismus ausgebildet ist, um einen Druck auf den zweiten Teilabschnitt des Kühlelements auszuüben. Eine solche Ausführungsform der vorliegenden Erfindung bietet den Vorteil, dass eine größeren Kühlfläche zur Wärmeabgabe an den abstehenden Teilabschnitten des Kühlelements zur Verfügung steht. Weiterhin stabilisiert ein Druck auf den abstehenden zweiten Teilabschnitt des Kühlelements dieses Kühlelement in der Halteeinrichtung, da die Kontaktfläche des abstehenden zweiten Teilabschitts des Kühlelements zumeist deutlich kleiner ist als eine Oberfläche der elektrischen Speichereinheit, so dass ein höherer Druck an der Kontakstelle Hebelmechanismus-Speicherelement auf das Speicherelement ausgeübt wird und damit eine geringere Wahrscheinlichkeit eines "Verrutschens" des Speicherelements in der Halteeinrichtung zu befürchten ist.

Günstig ist es auch, wenn die elektrische Energiespeichereinheit gemäß einer Ausführungsform zumindest ein zweites Speicherelement umfasst, welches eine zweite elektrische Speichereinheit und ein daran befestigtes zweites Kühlelement umfasst, wobei das zweite Kühlelement einen Teilabschnitt aufweist, der an zumindest einer Seite von einer Oberfläche der zweiten elektrischen Speichereinheit absteht und wobei der Hebelmechanismus der Halteeinrichtung ausgebildet ist, um das zweite Kühlelement ebenfalls derart an die Kühlplatte zu drücken, dass der von der Oberfläche der zweiten elektrischen Speichereinheit abstehende Teilabschnitt des zweiten Kühlelements die Kühlplatte thermisch wirksam kontaktiert Eine solche Ausführungsform der vorliegenden Erfindung bietet den Vorteil einer kompakten Energiespeichereinheit die eine schneite und einfache Montage von einzelnen Kassetten aus beispielsweise einer Baugruppe von einem Kühlblech und zwei Zellen ermöglicht, Zugleich wird beispielsweise ein Toleranzausgleich zwischen zwei benachbarten Brechen als Kühlelementenermöglicht, so dass auch geringfügige Herstellungstoleanzen dieser Speicherelemente ausgeglichen werden können.

Weiterhin kann auch in einer zusätzlichen oder alternativen Ausführungsform der vorliegenden Erfindung das Kühlelement oder zweite Kühlelement ein Kühlblech umfassen, welches Aluminium, Kupfer und/oder kupferbeschichtetes Aluminium aufweist. Eine derartige Ausführungsform der Erfindung bietet eine exzellente Möglichkeit zur Abführung von Wärme der elektrischen Speichereinheit, da Aluminium oder Kupfer eine ausgezeichnete Wärmeleitfähigkeit aufweisen.

Um eine stabile Struktur des Kühlelements oder des zweiten Kühlelements zu erhalten, kann das Kühlelement und/oder das zweite Kühlelement eine Mehrzahl von Kühlblechen umfassen. Die Verdopplung (oder Vervielfachung) der Kühlbleche steigert dabei die strukturelle Stabilität des Kühlelements, insbesondere eines abstehenden Teilabschnitts, so dass diese abstehenden Teilabschnitte eine höhere Druckbelastung aushalten

Auch kann in einer weiteren Ausführungsform der vorliegenden Erfindung die Mehrzahl von Kühlblechen durch einen Schließfalz miteinander verbunden sein. Ein solcher Schließfalz bietet eine hoch-belastbare Verbindung der Kühlbleche miteinander, so dass das Kühlelement mit einer noch höheren Druckbelastung durch den Hebelmechanismus beaufschlagt werden kann, als dies durch ein Einzelblech oder einen Blechverbund ohne einen definierten Abschluss möglich ist

In einer weiteren Ausführungsform der vorliegenden Erfindung kann das Kühlelement eine Dicke zwischen 0,2 und 2 mm aufweisen. Eine Dicke des Kühlelements in diesem Bereich stellt einerseits eine hohe Oberfläche des Kühlelements zur Wärmeabfuhr als auch andererseits eine ausreichend hohe Stabilität zur Aufnahme des Drucks durch den Hebelmechanismus sicher.

Auch kann die Kühlplatte zumindest eine Ausnehmung aufweisen, die ausgebildet ist, um den abstehenden Teilabschnitt des Kühlelements und/oder des zweiten Kühlelements in einem Presssitz aufzunehmen. Dies stellt vorteilhaft sicher, dass der abstehende Teil des Kühlelementes und/oder der abstehende Teil des zweiten Kühlelementes nicht auf der Kühlplatte abrutscht und die Halteeinrichtung somit eine feste und kompakte Bauform bildet,

Auch können das Kühlelement und/oder das zweite Kühlelement in einer weiteren Ausführungsform der Erfindung mit einer Klebeverbindung an der Kühlplatte befestigt sein. Dies stellt nochmal eine Erhöhung der Stabilität der gebildeten Baugruppe durch eine Erhöhung der Verbindungsfestigkeit zwischen dem Kühlelement und der Kühlplatte sicher.

In einer alternativen oder zusätzlichen Ausführungsform der vorliegenden Erfindung umfasst der Hebelmechanismus der Halteeinrichtung eine Schraubverbindung und ein mit der Schraubverbindung zur Ausübung des Drucks auf das Kühlelement und/oder das zweite Kühlelement zusammenwirkendes DruckStück, Hierdurch kann ein definierter Druck auf das Speicherelement und/oder das Kühlelement ausgeübt werden, wobei eine einfache und schnelle Montage der Baugruppe trotzdem gewährleistet ist.

Um eine einfache und schnell durchzuführende Anpassung an verschieden dimensionierte Speicherelemente zu ermöglichen, kann das Druckstück oder die Schraubverbindung ausgebildet sein, um Eingriff an einer Schiene längs der Halteeinrichtung zu nehmen.

Ferner kann auch das Druckstück zumindest eine Ausnehmung aufweisen, die zur Aufnahme eines Abschnitts des zumindest einen Kühlelements und/oder des zweiten Kühlelements ausgebildet ist. In einer solchen Ausführungsform der Erfindung ist einerseits eine stabile Halterung des Speicherelements möglich, wobei andererseits auch ein Toleranzausgleich bei der Befestigung von mehr als einem Speicherelement in der Halteeinrichtung durch ein seitliches "Verkippen" des Druckstücks ermöglicht wird.

In einer weiteren Ausführungsform der Erfindung ist das Druckstück ausgebildet, um einen gleichmäßigen Druck auf zumindest das Kühlelement und das zweite Kühlelement auszuüben. Diese Ausführungsform bildet eine einfache Modifikation, bei der mehrere Kühlelemente zugleich schnell und kostengünstig fixiert werden können.

Wenn die Schraubverbindung gemäß einer weiteren Ausführungsform der Erfindung mit einem definierten Drehmoment angezogen ist, um einen definierten Druck auf das zumindest eine Kühlelement auszuüben, kann sichergestellt werden, dass keine Verformung des Kühlelementes beim Spannen des Hebelmechanismus erfolgt, wobei jedoch zugleich auch die stabile Fixierung des Kühlelementes in der Halteeinrichtung gewährleistet ist. Das Anziehen der Schraubverbindung mit einem vordefinierten Drehmoment kann dabei unter Verwendung eines Drehmomentschlüssels erfolgen.

Die Erfindung wird nachstehend anhand der beigefügten Zeichnungen beispielhaft näher erläutert Es zeigt:
- Fig, 1: eine perspektivische Ansichtsdarstellung eines Ausführungsbeispiels der vorliegenden Erfindung;
- Fig. 2: eine Aufsichtsdarstellung des In Fig. 1 dargestellten Ausführungsbeispiels der vorliegenden Erfindung;
- Fig. 3: eine Querschnittdarstellung des in Fig. 1 und 2 dargestellten Ausführungsbeispiels entlang der in Fig, 2 dargestellten Schnittlinie B-B; und
- Fig. 4: eine Darstellung eines Längsschnitt-Ausschnitts entlang der in Fig, 2 dargestellten Schnittlinie A-A durch das in Fig. 1.

Gleiche oder ähnliche Elemente werden in den nachfolgenden Figuren der Zeichnungen mit gleichen oder ähnlichen Bezugszeichen versehen, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese merkmale auch einzeln betrachtet werden können oder sie zu weiteren, hier nicht explizit beschriebenen Kombinationen zusammengefasst werden können,

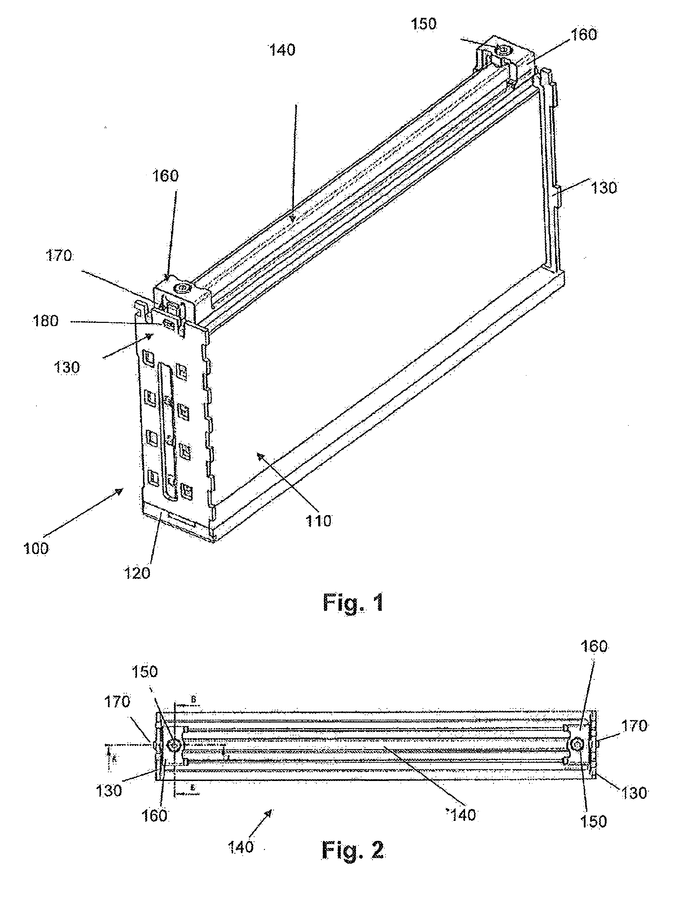

Die Figur 1 zeigt eine perspektivische Ansichtsdarstellung der elektrischen Energiespeichereinheit 100 gemäß einem Ausführungsbeispiel der vorliegenden Erfindung. Die Energiespeichereinheit 100 umfasst eine Halteeinrichtung 110, welche am Boden eine Kühlplatte 120, an den seitlichen Wänden Gestellhalterungen 130 und im oberen Bereich eine Schiene 140 zur Verbindung der beiden seitlichen Gestellhalterungen 130 aufweist. An der Schiene 140 kann mittels einer Schraubverbindung 150 (beispielsweise an jeder der seitlichen Gestellhalterungen 130) ein Druckstück 160 befestigt sein, Das Druckstück 160 kann selbst über einen Haken 170 an einer Ausnehmung 180 der entsprechenden seitlichen Gestellhalterung 130 befestigt sein. Auf diese Weise kann eine seitliche Fixierung des Druckstücks 160 an der Schiene 140 im Bereich der Gestellhalterungen 130 sichergestellt werden und zugleich ein Hebelmechanismus durch die Schraubverbindung 150 betätigt werden. Alternativ kann das Druckstück 160 jedoch auch an einer beliebigen Position auf der Schiene 140 befestigt werden, um entsprechend dimensionierte Speicherelemente in der Halteeinrichtung 110 zu fixieren. Eventuell könnten in diesem Fall noch weitere Befestigurigslöcher auf der Schiene 140 vorgesehen werden, um einen Druck mittels der Schraubverbindung 160 auf das nachfolgend dargestellte Kühlelement ausÜben zu können.

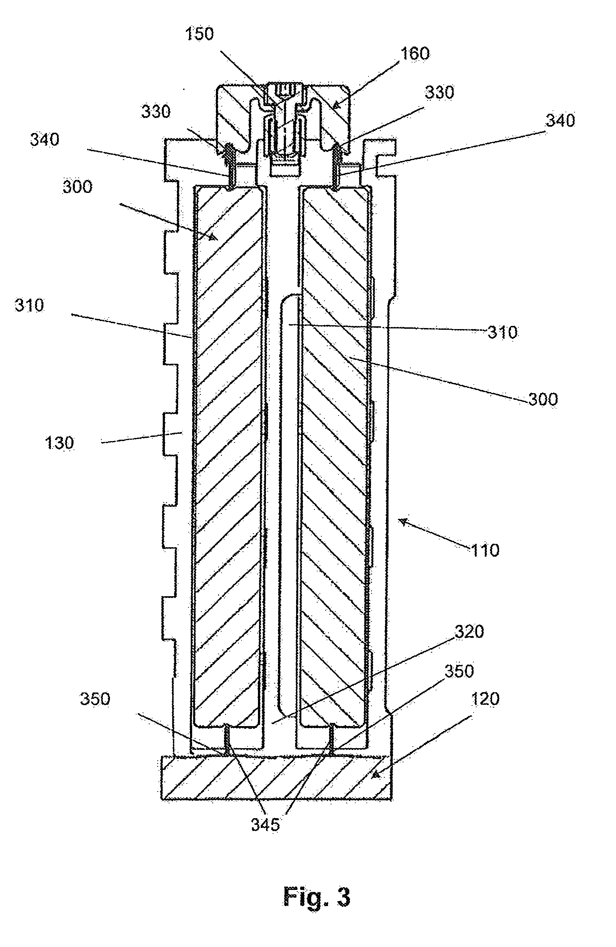

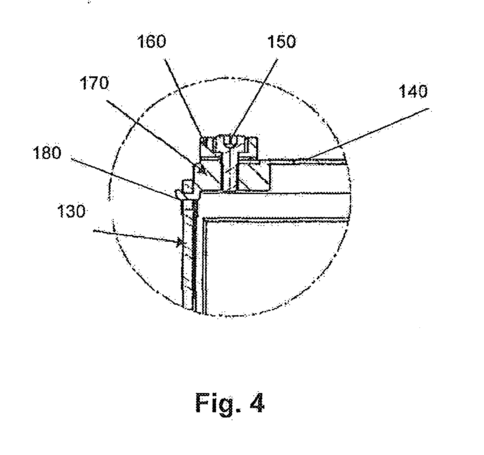

Figur 2 zeigt eine Aufsichtsdarstellung der in Figur 1 dargestellten elektrischen Energiespeichereinheit 100, wobei die entsprechenden Elemente mit den jewells gewählten Bezugszeichen entsprechend der Figur 1 versehen sind. Ferner werden im linken Teilabschnitt der Figur 2 Schnittlinien A-A und B-B dargestellt, welche Schnittrichtungen für die in den Figuren 3 und 4 dargestellten Schnittansichten wiedergeben.

In Fig. 3 ist eine Querschnittdarstellung des in Fig. 1 und 2 dargestellten Ausder vorliegenden Erfindung wiedergegeben, aus dem eine genaue Anordnung von elektrischen Energiespeicherzellen (Speichereinheiten) zu entnehmen ist. Die Schnittrichtung entspricht dabei der in Fig. 2 dargestellten Schnittlinie 8-8.

Die einzelnen (im dargestellten Ausführungsbeispiel speziell zwei) elektrischen Speichereinheiten 300, die beispielsweise (Balterie-)Zellen des Energiespeichers sind, sind auf Kühlelementen 310 wie z.B. Kühlblechen befestigt. Diese Befestigung kann beispielsweise darin bestehen, dass die Kühlbieche auf diese elektrischen Speichereinheiten aufgeklebt oder gesteckt sind. Eine solche kompakete Verbindung aus elektrischer Speichereinheit 300 und Kühlelement 310 wird im Weiteren auch als "Speicherelement" bezeichnet.

Das Kühlblech 310 übernimmt die mechanische Aufhängung der Zelle und die thermische Kontaktierung (Kühlung). Der elektrische Pfad ist nicht Funktionsumfang des Kühlblechs, so dass auch im Kurzschlussfall kein katastrophaler Fall des Versagens zu erwarten ist.

Die Zelle 300 kann ferner von einer oder von beiden Seiten mit Blechen 310 bestückt sein oder ein Blech 310 kann beidseitig mit Zellen 300 bestückt werden.

Ein Toleranzausgleich in einem Zellstapel kann durch Einbringen von Freiräumen 320.
die ggf. mit einem kompressiblem Material verfüllt werden können gewährleistet werden. Die Kühlung der Speicherelemente kann über die von außen einfach zu kontaktierende Kühlplatte 120 erfolgen.

Die Kühlbleche 310 sind günstigerweise aus einem gut wärmeleitenden Material wie Aluminium, Kupfer oder kupferbeschichtetem Aluminium gefertigt. Die bevorzugte Dicke beträgt 0,2 - 2mm, damit einerseits eine große Oberfläche zur Wärmeaufnahme, Wärmeleitung bzw. Wäremabgabe zur Verfügung steht und zugleich auch eine gute mechanische Halteeigenschaft der Kühlbleche 310 sichergestellt ist. Gegebenenfalls kann das Blech als Biegeteil in der Gestalt geformt sein, dass sich im Schnitt die Schichtung Zelle-Blech-Toleranzausgleich-Blech-Zellen ausbildet. Ferner bietet es sich außerdem an, das Kühlblech 310 aus zwei einzelnen Brechen herzustellen, Die Verbindung der beiden Bleche kann dann z.B. über einen Schließfalz 330 erfolgen. Ein solcher Schließfalz 330 ist in Fig. 3 an einem von der Oberfläche der elektrischen Speichereinheit 300 abstehenden Teilabschnitt 340 im oberen Bereich des Kühlelementes 310 dargestellt. Eine solche Kombination aus einer Blechlagenschichtung, die mit einem Schließfalz 330 abgeschossen wird, bietet bei einer Druckbelastung eine hohe mechanische Stabilität.

Die Kühlbleche 310 werden bei der in Fig. 3 dargestellten Variante so ausgebildet, dass sie nach beiden Seiten hin von der Oberfläche der elektrischen Speichereinheit 300 ausstehende "Furchen" haben, wobei die "Füßchen" (bzw. Teilabschnitte des Kühlelementes) im unteren Bereich des Kühlelementes 310 zur besseren Unterscheidung gegenüber den abstehenden "Füßchen" im oberen Bereich des Kühlelementes 310 das Bezugszeichen 345 erhalten. Die Kontaktierung zwischen Kühlplatte 120 und Kühlelement 310 soll dann über die abgebildete Anlgefläche der unteren "Füßchen" 345 erfolgen, wie es in Fig. 3 dargestellt ist. Diese "Füßchen" 345 stellen dabei ebenfalls einen von der Oberfläche der elektrischen Speichereinheit 300 abstehenden Teilabschnitt des Kühlelementes 310 dar.

Die mit (in diesem Ausführungsbeispiel mehreren) Zellen 300 bestückten Kühlbleche 310 werden daher in dem Gestell 110, welches mit der Kühlplatte 120 verbunden ist, auf der Kühlplatte 120 angeordnet. Mittels des Druckbügels 160, der mit dem Gestell 110 verbunden ist, werden die Zellkassetten 300, 310, bzw. die unteren "Füßchen" 345 in Richtung Kühlplatte, 120 gedrückt, so dass ein thermischer Kontakt zwischen Kühlplatte 120 und Kühlblech 310 entsteht. Um den thermischen Kontakt zu verbessern und der Konstruktion noch zusätzliche mechanische Stabilität zu verleihen bietet es sich an, die Kontaktstelle zwischen Kühlblech 310 und Kühlplatte 120 noch zusätzlich mit einem Klebematerial zu verkleben (was aber in Fig. 3 nicht dargestellt ist).

Der Kraftfluss der durch das Anziehen der Schrauben der Schraubverbindung 160 ausgelöst wird, wirkt über den (Hebel-)Mechanismus zwischen Haken 170, Gestell 110 (bzw. Gestellhalterung 130), Druckstück 160. Schiene 140 in die Kühlbleche 310 bzw. deren abstehenden Teilabschnitten ("Füßchen") 345 auf die Kühlplatte 120. Der Kraftschluss kann durch das Zusammenwirken der jeweiligen Elemente verdeutlicht werden, wie sie in der Längsschnitt-Ansicht gemäß Fig. 4 dargestellt sind

Alternativ könnten die "Füßchen" 345 auch als vom Kühlblech separat gefertigte und mit diesen mechanisch oder stoffschlüssig, beispielsweise durch Kleben, verbundenen und somit eigensteifere Elemente hergestellt werden. Hierdurch würde eine wesentlich freiere Formgestaltung dieser "Füßchen" ermöglicht um eine optimierte thermische Kontaktierung zu reagieren.

Falls das Anziehen der Schrauben der Schraubverbindung 160 mittels eines Drehmomentschlüssels getätigt wird, kann man dann gezielt die Anpresskraft über die Bleche 310 bestimmen, um auf diese Weise eine vorbestimmte Andruckkraft der Kühlbleche 310 auf die Kühlplatte 120 zu erreichen und damit ein "Verrutschen" der Speicherelemente 300, 310 in der Halteeinrichtung 100 zu verhindern.

Die Kühlbleche 310 können mit der Kühlplatte 120 durch konische Presssitze 350 verbunden werden, wie dies in Fig. 3 dargestellt ist. In der Kühlplatte befinden sich günstigerweise konusförmige Aussparungen, die in Fig. 3 jedoch nicht gezeigt sind. Das Kühlblech 310 wird bzw. die Kühlbleche 310 werden gemäß dem vorstehend beschriebenen Mechanismus in die Aussparungen in der Kühlplatte 120 gedrückt, so dass eine formschlüssige Verbindung entsteht. Gegebenenfalls kann eine weitere Fixierung durch Klebstoff erfolgen.

In Fig. 3 ist die Erfindung an Hand eines Ausführungsbeispiels mit zwei Speicherelementen dargestellt. Es ist für einen Fachmann jedoch offensichtlich, dass die Erfindung auch mit lediglich einem Speicherelement 300, 310 oder mit mehr als zwei Speicherelementen 300, 310 ausgeführt werden kann, ohne dass von dem Einsatz des erfinderischen Ansatzes der Verwendung des vorstehend beschriebenen Hebelmechanismus abgewichen werden muss. Auf diese Weise ist die Erfindung nicht auf die in Fig. 3 dargestellte Ausführungsform der Verwendung von zwei Speicherelementen in der Halteeinrichtung beschränkt.

Gemäß einem weiteren Ausführungsbeispiel der vorliegenden Erfindung, das hier allerdings nicht bildlich dargestellt ist, können das Andrücken und die Fixierung aller Kühlbleche 310 von unterschiedlichen Speicherelementen 300, 310 gleichzeitig mittels einer Druckplatte erfolgen. Dies hat zwar den Nachteil, dass kein Toleranz-Ausgleich zwischen den Kühlblechen möglich ist und dass keine Einstellung der Presskraft auf die einzelne Kühlbleche möglich ist. Durch die Verwendung der genannten Druckplatte wird jedoch eine konstruktive Vereinfachung möglich, die zugleich eine schnellere und weniger fehleranfällige Montage der elektrischen Energiespeichereinheit ermöglicht.

Die vorliegende Erfindung bietet also die Möglichkeit einer Kontaktierung und Fixierung von Batterieflachzellen samt Kühlblechen insb. Lithium-Ionen-Zellen in CoffeeBag-Technologie an eine Wärmesenke über einen potentialfreien thermischen Pfad. Im hier beschriebenen speziellen Fall erfolgt die Fixierung von Kühlblechen 310 an eine (beispielsweise metallische) Kühlplatte 120.

Die bereits mit Zellen 300 bestückten/beklebten Kühlbleche 310 können mechanisch und thermisch effizient mit einer Kühlplatte verbunden werden, wobei fortan die Kontaktierung und Fixierung der Kühlbleche mittels eines Hebelmechanismus gewährleistet werden sollte.

Die vorliegende Erfindung bietet damit den Vorteil, die Montage einzelner Kassietten (d.h. Baugruppen jeweils bestehend aus einem Kühlblech und zwei Zellen) effizient durchzuführen. Sie gewährleistet in speziellen Ausführungsformen auch den Toleranzausgleich zwischen zwei benachbarten Blechen durch ein eventuelles Kippen des Druckstückes. Ferner ermöglicht sie die Einstellung der Druckkraft auf die Kühlbleche durch die Verwendung eines definierten für alle Baugruppen gleichen Anzugsdrehmomentes der Schraubverbindung. Zusätzlich erlaubt die beschriebene Montage das schnelle und effiziente Umtauschen einzeinen Zellkassetten, soweit keine Verklebung der Kühlbleche auf der Kühlplatte erfolgt ist.

### Bezugszeichenliste

- 100: elektrische Energiespelchereinheit
- 110: Halteeinrichtung
- 120: Kühlplatte
- 130: Gestellhalterung, Wände
- 140: Schiene
- 150: Schraubverbindung
- 160: Druckstück
- 170: Haken
- 180: Ausnehmung

- 300: Zelle, elektrische Speichereinheit
- 310: Kühlelement, Kühlbleche(e)
- 320: Toleranz-Zwischenraum
- 330: Schließfalz
- 340: von der Oberfläche der elektrischen Speichereinheit abstehender Teilabschnitt des Kühlelementes
- 345: "Füßchen"
- 350: Presssitz

## Patentansprüche

1. Elektrische Energiespeichereinheit (100) mit folgenden Merkmalen:
- zumindest ein Speicherelement (300, 310), das eine elektrische Speichereinheit (300) und zumindest ein daran befestigtes Kühlelement (310) umfasst, wobei das Kühlelement (310) einen Teilabschnitt (345) aufweist, der an zumindest einer Seite von einer Oberfläche der elektrischen Speichereinheit (300) absteht; und
- einer Halteeinrichtung (110) zur Aufnahme des zumindest einen Speicherelements (300, 310), wobei an der Halteeinrichtung (110) eine Kühlplatte (120) angeordnet ist und wobei die Halteeinrichtung (110) einen Hebelmechanismus (140, 150, 160, 170) umfasst, der ausgebildet ist, um das Kühlelement (310) derart an die Kühlplatte (120) zu drücken, dass der von der Oberfläche der elektrischen Speichereinheit (300) abstehende Teilabschnitt (345) des Kühlelements (310) die Kühlplatte (120) thermisch wirksam kontaktiert, **dadurch gekennzeichnet, dass** der Hebelmechanismus (140, 150, 160, 170) ausgebildet ist, um einen Druck auf das Kühlelement (310) von einer Seite der elektrischen Speichereinheit (300) auszuüben, die derjenigen Seite gegenüberliegt, an dem das Kühlelement (345) von der Oberfläche der elektrischen Speichereinheit (340) absteht.

2. Elektrische Energiespeichereinheit (100) gemäß Anspruch 1, **dadurch gekennzeichnet, dass** das Speicherelement (300, 310) einen weiteren Teilabschnitt (340) des Kühlelements (310) aufweist, der von der Oberfläche der elektrischen Speichereinheit (300) absteht und der demjenigen Teil (345) des Kühlelements (310) gegenüberliegt, der von der Oberfläche der elektrischen Speichereinheit (300) absteht und die Kühlplatte (120) kontaktiert, wobei der Hebelmechanismus ausgebildet ist, um einen Druck auf den weiteren Teilabschnitt (340) des Kühlelements (310) auszuüben.

3. Elektrische Energiespeichereinheit (100) gemäß einem der Ansprüche 1 oder 2, **dadurch gekennzeichnet, dass** sie zumindest ein zweites Speicherelement (300, 310) umfasst, das eine zweite elektrische Speichereinheit (300) und ein daran befestigtes zweites Kühlelement (310) umfasst, wobei das zweite Kühlelement (310) einen Teilabschnitt (345) aufweist, der an zumindest einer Seite von einer Oberfläche der zweiten elektrischen Speichereinheit (300) absteht und wobei der Hebelmechanismus (140, 150, 160, 170) der Halteeinrichtung (110) ausgebildet ist, um das zweite Kühlelement (310) ebenfalls derart an die Kühlplatte (120) zu drücken, dass der von der Oberfläche der zweiten elektrischen Speichereinheit (300) abstehende Teilabschnitt (345) des zweiten Kühlelements (310) die Kühlplatte (120) thermisch wirksam kontaktiert.

4. Elektrische Energiespeichereinheit (100) gemäß einem der Ansprüche 1 bis 3, **dadurch gekennzeichnet, dass** das Kühlelement (310) oder zweite Kühlelement ein Kühlblech umfasst, welches Aluminium, Kupfer und/oder kupferbeschichtetes Aluminium umfasst.

5. Elektrische Energiespeichereinheit (100) gemäß einem der Ansprüche 1 bis 4, **dadurch gekennzeichnet, dass** das Kühlelement (310) oder zweite Kühlelement eine Mehrzahl von Kühlblechen umfasst.

6. Elektrische Energiespeichereinheit (100) gemäß Anspruch 5, **dadurch gekennzeichnet, dass** die Mehrzahl von Kühlblechen durch einen Schließfalz (330) miteinander verbunden sind.

7. Elektrische Energiespeichereinheit (100) gemäß einem der Ansprüche 1 bis 6, **dadurch gekennzeichnet, dass** das Kühlelement (310) eine Dicke zwischen 0,2 und 2 mm aufweist.

8. Elektrische Energiespeichereinheit (100) gemäß einem der Ansprüche 1 bis 7, **dadurch gekennzeichnet, dass** die Kühlplatte (120) zumindest eine Ausnehmung aufweist, die ausgebildet ist, um den abstehenden Teilabschnitt (345) des Kühlelements (310) und/oder des zweiten Kühlelements in einem Presssitz (350) aufzunehmen.

9. Elektrische Energiespeichereinheit (100) gemäß einem der Ansprüche 1 bis 8, **dadurch gekennzeichnet, dass** das Kühlelement (310) und/oder das zweite Kühlelement mit einer Klebeverblndung an der Kühlplatte (120) befestigt ist.

10. Elektrische Energiespeichereinheit (100) gemäß einem der Ansprüche 1 bis 9, **dadurch gekennzeichnet, dass** der Hebelmechanismus (140, 150, 160, 170) der Halteeinrichtung (110) eine Schraubverbindung (150) und ein mit der Schraubverbindung (150) zur Ausübung des Drucks auf das Kühlelement (310) und/oder das zweite Kühlelement zusammenwirkendes Druckstück (160) umfasst.

11. Elektrische Energiespeichereinheit (100) gemäß Anspruch 10, **dadurch gekennzeichnet, dass** das Druckstück (160) oder die Schraubverbindung (150) ausgebildet ist, um Eingriff an einer Schiene (140) längs der Halteeinrichtung (110) zu nehmen.

12. Elektrische Energiespeichereinheit (100) gemäß einem der Ansprüche 10 oder 11, **dadurch gekennzeichnet, dass** das Druckstück (160) zumindest eine Ausnehmung aufweist, die zur Aufnahme eines Abschnitts des zumindest einen Kühlelements (310) und/oder des zweiten Kühlelements ausgebildet ist.

13. Elektrische Energiespeichereinheit (100) gemäß einem der Ansprüche 10 bis 12. **dadurch gekennzeichnet, dass** das Druckstück (160) ausgebildet ist, um einen gleichmäßigen Druck auf zumindest das Kühlelement (310) und das zweite Kühlelement auszuüben.

14. Elektrische Energiespeichereinheit (100) gemäß einem der Ansprüche 10 bis 13, **dadurch gekennzeichnet, dass** die Schraubverbindung (150) mit einem definierten Drehmoment angezogen ist, um einen definierten Druck auf das zumindest eine Kühlelement (310) auszuüben.

## Claims

1. An electric energy storage unit (100) comprising the following features:
- at least one storage element (300, 310) comprising an electric storage unit (300) and at least one cooling element (310) attached thereon, wherein the cooling element (310) has a partial section (345), which projects from the surface of the electric storage unit (300) on at least one side; and
- a support devise (110) for receiving the at least one storage element (300, 310), wherein a cooling plate (120) is disposed on the on the support device (110), and wherein the support device (110) comprises a lever mechanism (140, 150, 160, 170) that is embodied in order to press the cooling element (310) onto the cooling plate (120) such that the partial section (345) of the cooling element (310) projecting from the surface of the electric storage unit (300) contacts the cooling plate (120) in a thermally affective manner, **characterized in that** the lever mechanism (140, 150, 160, 170) is embodied in order to apply pressure onto the cooling element (310) from a side of the electric storage unit (300), which is located opposite of that side, on which the cooling element (345) projects from the surface of the electric storage unit (340).

2. The electric energy storage unit (100) according to claim 1, **characterized in that** the storage element (300, 310) comprises a further partial section (340) of the cooling element (310), which projects from the surface of the electric storage unit (300), and is located opposite that portion (345) of the cooling element (310), which projects from the surface of the electric storage unit (300), and which contacts the cooling plate (120), wherein the lever mechanism is embodied in order to apply pressure onto the further partial section (340) of the cooling element (310).

3. The electric energy storage unit (100) according to one of the claims 1 or 2, **characterized in that** it comprises at least a second storage element (300, 310), which comprises a second electric storage unit (300) and a second cooling element (310) attached to the same, wherein the second cooling element (310) has a partial section (345), which projects from a surface of the second electric storage unit (300) on at least one side, and wherein the lever mechanism (140, 150, 160, 170) of the support device (110) is embodied in order to also press the second cooling element (310) onto the cooling plate (120) such that the partial section (345) of the second tooling element (310) projecting from the surface of the second electric storage unit (300) contacts the cooling plate (120) in a thermally effective manner.

4. The electric energy storage unit (100) according to one of the claims 1 to 3, **characterized in that** the cooling element (310), or the second cooling element, respectively, comprises a cooling baffle comprising aluminum, copper, and/or copper-plated aluminum.

5. The electric energy storage unit (100) according to one of the claims 1 to 4, **characterized in that** the cooling element (310), or the second cooling element, respectively, comprises a plurality of cooling baffles.

6. The electric energy storage unit (100) according to claim 5, **characterized in that** the plurality of cooling baffles are connected to each other by means of a closing seam (330).

7. The electric energy storage unit (100) according to one of the claims 1 to 6, **characterized in that** the cooling element (310) has a thickness of between 0.2 and 2 mm.

8. The electric energy storage unit (100) according to one of the claims 1 to 7, **characterized in that** the cooling plate (120) has at least one recess, which is embodied in order to receive the projecting partial section (345) of the cooling element (310) and/or of the second cooling element, respectively, in a press fit (350).

9. The electric energy storage unit (100) according to one of the claims 1 to 8, **characterized in that** the cooling element (310), and/or the second cooling element, respectively, is connected to the cooling plate (120) by means of an adhesive bond.

10. The electric energy storage unit (100) according to one of the claims 1 to 9, **characterized in that** the lever mechanism (140, 150, 160, 170) of the support device (110) comprises a screw joint (150) and a pressure pad (160) interacting with the screw joint (150) for applying pressure onto the cooling element (310), and/or the second cooling element, respectively.

11. The electric energy storage unit (100) according to claim 10, **characterized in that** the pressure pad (160), or the screw joint (150), respectively, is embodied in order to engage into a rail (140) longitudinally of the support device (110).

12. The electric energy storage unit (100) according to one of the claims 10 or 11, **characterized in that** the pressure pad (160) has at least one recess, which is embodied for receiving a section of the at least one cooling element (310), and/or the second cooling element, respectively.

13. The electric energy storage unit (100) according to one of the claims 10 to 12, **characterized in that** the pressure pad (160) is embodied in order to apply even pressure onto the at least one cooling element (310), and the second cooling element.

14. The electric energy storage unit (100) according to one of the claims 10 to 13, **characterized in that** the screw joint (150) is tightened at a defined torque in order to apply a defined pressure onto the at least one cooling element (310).

## Revendications

1. Ensemble accumulateur d'énergie électrique (100) ayant les caractéristiques suivantes :
- au moins un élément d'accumulateur (300, 310) qui comprend un élément de batterie électrique (300) et au moins un élément de refroidissement (310) fixé sur celui-ci, où l'élément de refroidissement (310) présente une partie d'embase (345) qui, au moins sur une côté, est en saillie par rapport à une surface de l'élément de batterie électrique (300), et
- un dispositif de retenue (110) servant au logement de l'élément d'accumulateur (300, 310) au moins au nombre de un, où une plaque de refroidissement (120) est disposée sur le dispositif de retenue (110) et où le dispositif de retenue (110) comprend un mécanisme à levier (140, 150, 160, 170) qui est conçu pour presser l'élément de refroidissement (310) contre la plaque de refroidissement (120), de manière telle que la partie d'embase (345) de l'élément de refroidissement (310), qui fait saillie par rapport à la surface de l'élément de batterie électrique (300), vienne au contact de la plaque de refroidissement (120), de façon thermiquement efficace,
**caractérisé en ce que** le mécanisme à levier (140, 150, 160, 170) est conçu pour exercer une pression sur l'élément de refroidissement (310), à partir d'un côté de l'élément de batterie électrique (300) qui fait face au côté sur lequel l'élément de refroidissement (310) est en saillie par rapport à la surface de l'élément de batterie électrique (300).

2. Ensemble accumulateur d'énergie électrique (100) selon la revendication 1, **caractérisé en ce que** l'élément d'accumulateur (300, 310) présente une autre partie d'embase (340) de l'élément de refroidissement. (310), partie d'embase qui est en saillie par rapport à la surface de l'élément de batterie électrique (300) et qui fait face à la partie (345) de l'élément de refroidissement (310) qui est en saillie par rapport à la surface de l'élément de batterie électrique (300) et vient au contact de la plaque de refroidissement (120), où le mécanisme à levier est conçu pour exercer une pression sur l'autre partie d'embase (340) de l'élément de refroidissement (310).

3. Ensemble accumulateur d'énergie électrique (100) selon l'une des revendications 1 ou 2, **caractérisé en ce qu'**il comprend au moins un deuxième élément d'accumulateur (300, 310) qui comprend un deuxième élément de batterie électrique (300) et un deuxième élément de refroidissement (310) fixé sur celui-ci, où le deuxième élément de refroidissement (310) présente une partie d'embase (345) qui, sur au moins un côté, est en saillie par rapport à une surface du deuxième élément de batterie électrique (300) et où le mécanisme à levier (140, 150, 160, 170) du dispositif de retenue (110) est conçu pour presser le deuxième élément de refroidissement (310) contre la plaque de refroidissement (120), régalement de manière telle que la partie d'embase (345) du deuxième élément de refroidissement (310), qui fait saillie par rapport à la surface du deuxième élément de batterie électrique (300), vienne au contact de la plaque de refroidissement (120), de façon thermiquement efficace.

4. Ensemble accumulateur d'énergie électrique (100) selon l'une quelconque des revendications 1 à 3, **caractérisé en ce que** l'élément de refroidissement (310) ou le deuxième élément de refroidissement comprend une tôle de refroidissement qui comprend de l'aluminium, du cuivre et / ou de l'aluminium recouvert de cuivre.

5. Ensemble accumulateur d'énergie électrique (100) selon l'une quelconque des revendications 1 à 4, **caractérisé en ce que** l'élément de refroidissement (310) ou le deuxième élément de refroidissement comprend une pluralité de tôles de refroidissement.

6. Ensemble accumulateur d'énergie électrique (100) selon la revendication 5, **caractérisé en ce que** les tôles de refroidissement formant une pluralité d'éléments sont assemblées les unes aux autres par un pliage de fermeture (330).

7. Ensemble accumulateur d'énergie électrique (100) selon l'une quelconque des revendications 1 à 6, **caractérisé en ce que** l'élément de refroidissement (310) présente une épaisseur comprise entre 0,2 mm et 2 mm.

8. Ensemble accumulateur d'énergie électrique (100) selon l'une quelconque des revendication 1 à 7_{,} **caractérisé en ce que** la plaque de refroidissement (120) présente au moins une cavité qui est configurée pour loger, dans un ajustement serré (350), la partie d'embase (345) - qui fait saillie - de l'élément de refroidissement (310) et / ou du deuxième élément de refroidissement.

9. Ensemble accumulateur d'énergie électrique (100) selon l'une quelconque des revendications 1 à 8, **caractérisé en ce que** l'élément de refroidissement (310) et / ou le deuxième élément de refroidissement est fixé sur la plaque de refroidissement (120), par un assemblage collé.

10. Ensemble accumulateur d'énergie électrique (100) selon l'une quelconque des revendications 1 à 9, **caractérisé en ce que** le mécanisme à levier (140, 150, 160, 170) du dispositif de retenue (110) comprend un assemblage vissé (150) et une pièce de pression (160) agissant conjointement avec l'assemblage vissé (150), pour exercer la pression sur l'élément de refroidissement (310) et / ou sur le deuxième élément de refroidissement.

11. Ensemble accumulateur d'énergie électrique (100) selon la revendication 10, **caractérisé en ce que** la pièce de pression (160) ou l'assemblage vissé (150) est conçu(e) pour venir en prise sur un rail (140), le long du dispositif de retenue (110).

12. Ensemble accumulateur d'énergie électrique (100) selon l'une des revendications 10 ou 11, **caractérisé en ce que** la pièce de pression (160) présente au moins une cavité qui est configurée pour servir au logement d'une partie de l'élément de refroidissement (310) au moins au nombre de un et / ou du deuxième élément de refroidissement.

13. Ensemble accumulateur d'énergie électrique (100) selon l'une quelconque des revendication 10 à 12, **caractérisé en ce que** la pièce de pression (160) est conçue pour exercer une pression constante sur au moins l'élément de refroidissement (310) et sur le deuxième élément de refroidissement.

14. Ensemble accumulateur d'énergie électrique (100) selon l'une quelconque des revendications 10 à 13, **caractérisé en ce que** l'assemblage vissé (150) est serré avec un couple défini, pour exercer une pression défini sur l'élément de refroidissement. (310) au moins au nombre de un.
